# EUROPEAN PATENT SPECIFICATION

(11) **EP 0 941 484 B1**
(45) Date of publication and mention of the grant of the patent: **16.02.2005**
(21) Application number: 98963740.0
(22) Date of filing: 22.09.1998
(51) Int. Cl.: G01S 1/00, F41G 7/30, G01S 13/02, G01S 13/42

(54) **IMPULSE RADAR GUIDANCE APPARATUS AND METHOD FOR USE WITH GUIDED PROJECTILES**
IMPULSRADARLENKUNGSVORRICHTUNG UND VERFAHREN ZU DESSEN VERWENDUNG MIT GELENKTEN GESCHOSSEN
APPAREIL DE GUIDAGE PAR RADAR A IMPULSIONS ET PROCEDE D'UTILISATION AVEC DES PROJECTILES GUIDES

(30) Priority: 30.09.1997 US 940173
(43) Date of publication of application: 15.09.1999
(73) Proprietor: Raytheon Company, El Segundo, California 90245-0902 (US)
(72) Inventor: SCHNEIDER, Arthur, J., Tucson, AZ 85748 (US); SMALL, James, G., Tucson, AZ 85750 (US)
(74) Representative: Jackson, Richard Eric
(86) International application number: PCT/US1998/019760
(87) International publication number: WO 1999/017130

(56) References cited:
- EP-A- 0 237 429
- EP-A- 0 239 156
- EP-A- 0 345 836
- GB-A- 2 279 179
- US-A- 4 641 801
- US-A- 5 099 246

## Description

### BACKGROUND

The present invention relates generally to impulse radar guidance systems and methods, and more particularly, to an impulse radar guidance system and method for use with spinning guided projectiles.

Previous means to measure the roll angle of a projectile generally fall into one of three categories. The first is where the projectile is equipped with a roll gyroscope and a transmitter to communicate its roll angle to a launch control system. An example of this is an artillery round concept currently being developed by Bofors Weapons Systems of Sweden.

The second is where the projectile is provided with a polarizing reflector for use with either a radar or a laser. The polarization angle of received reflections indicates the roll angle. However, this method suffers from an ambiguity of 180° in roll. Thus, half the time, the projectile will be commanded to deflect in the wrong direction.

The third is where the projectile is imaged with a fast camera shortly after launch to determine its roll angle. Polarized reflections are used to count and keep track of subsequent rolls. This is a very complicated method which fails if the data stream is interrupted during flight of the projectile.

Accordingly, it is an objective of the present invention to provide for an improved guidance apparatus and method for use with guided projectiles that overcomes the limitations of the approaches outlined above. It is a further objective of the present invention to provide for an impulse radar guidance apparatus and method for use with a spinning guided projectile has been disclosed that uses an asymmetric waveform to determine the instantaneous roll angle of the spinning projectile and resolves the 180° roll ambiguity of the projectile.

US 5 099 246 A discloses an apparatus for determining the roll position of a spinning projectile with the aid of a polarized electromagnetic radiation having an asymmetric wave-form and a rearwardly-directed receiving dipole antenna of the receiver on the projectile.

### SUMMARY OF THE INVENTION

To meet the above and other objectives, the present invention provides for an improved impulse radar guidance system according to claim 1 and method for use with spinning projectiles according to claim 11. The present invention provides for a method and apparatus for tracking the flight of a spinning projectile, bullet, missile, or artillery shell, for example, using an all-weather radar. By means of a novel impulse waveform and reflector on the spinning projectile, an impulse radar (tracker) measures the instantaneous roll angle of the spinning projectile during its flight. The projectile has a maneuvering device, such as a side-firing thruster, and a receiver that is used as a data link to receive commands. Terminal maneuvering of the spinning projectile is accomplished by commanding the maneuvering device or thruster to fire at one or more specific roll-angles to deflect the flight direction of the projectile at a target.

The purpose of the present invention is to provide an all-weather long-range control system for spinning command-guided projectiles. Such projectiles can be very low cost, since they do not require seekers or complex on-board computers. Furthermore, a spinning projectile needs only a single deflection thruster to maneuver in any direction since the thruster can be fired at appropriate roll angles. In many applications, the thruster need be fired only once (a single-shot thruster) late in the flight in order to correct for initial launch errors.

The present invention thus provides a simple radar-means to measure the roll angle of the projectile at any time during its flight. The present invention may be used to provide an all-weather guided-bullet upgrade for the Phalanx gun system in the inventory of the U.S. Army.

The present invention provides for an improvement over the Bofors artillery-round concept outlined in the Background section. The present invention is simpler, lower in cost, and is believed to be more accurate. The present invention makes possible artillery rounds having much less dispersion in their impact patterns and thus makes them more effective than conventional systems.

The present invention makes possible, the development of very small guided-bullet systems which may be used for self defense against incoming missile threats. Applications range from defense of ground vehicles to aircraft self-defense.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig. 1 illustrates an impulse radar guided projectile system and method for use with spinning guided projectiles in accordance with the principles of the present invention;
Fig. 2 illustrates an impulse radar waveform that is used in an impulse radar in accordance with the principles of the present invention;
Fig. 3 shows a reflecting antenna employed on the guided projectile that is used to reflect the impulse radar waveform shown in Fig. 2 and which resolves ambiguities in the roll orientation of the spinning guided projectile; and
Figs. 4a and 4b illustrate one method of guiding a spinning projectile at a target in accordance with the principles of the present invention.

### DETAILED DESCRIPTION

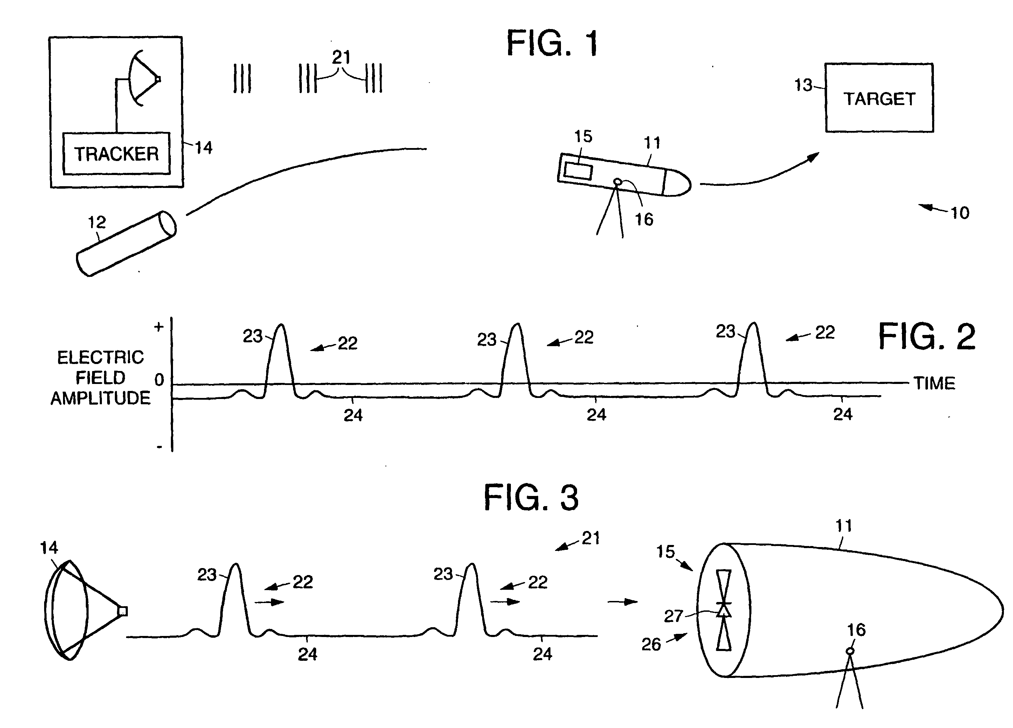

Referring to the drawing figures, Fig. 1 illustrates an impulse radar guided projectile system 10 and method 30 for use with a spinning guided projectile 11 in accordance with the principles of the present invention. Fig. 1 shows the spinning guided projectile 11, which may be a spinning bullet 11, missile, or artillery projectile 11, for example, that is launched from a launcher 12 at a target 13 and which may by guided to the target 13 using an impulse radar 14 or tracker 14 in accordance with the principles of the present invention. A guided projectile system 10 requires means for tracking the rotation of the spinning projectile 11 during its flight and a means for causing terminal maneuvering of the spinning projectile 11. Tracking is achieved by microwave or laser radar 14 that communicates with a receiver 15 on the spinning projectile 11 that is used as part of a data link. Terminal maneuvering is provided by a side-firing thruster 16 on the spinning projectile 11. Terminal maneuvering of the spinning projectile 11 is accomplished by commanding the thruster 16 to fire at one or more specific roll-angles to deflect the flight direction of the spinning projectile 11 at the target 13.

Typically, a single thruster 16 is fired one or more times to deflect the spinning projectile 11. A tracker on the launcher 12 or at the location of the radar 14 computes an appropriate fly-out range and direction to fire the thruster 16. Using the data link between the tracker 17 and the spinning projectile 11, the thruster 16 is commanded to fire when the spinning projectile 11 rotates to an appropriate roll angle.

A fundamental issue in controlling the firing of the thruster 16 is to determine the instantaneous roll angle of the spinning projectile 11. Various schemes employing the transmission or reflection of polarized radiation have been proposed and are outlined in the Background section. A fundamental problem with polarization approaches is an ambiguity in roll-angle sensing by 180°. For example, when the polarization axis is vertical, it is not possible to determine whether the thruster 16 is pointing directly up or directly down. In some cases, it is possible to image the spinning projectile 11 at a short range from the launcher 12 and then use polarization rotations to count the number of rotations during the remainder of the flight. Imaging approaches are complicated and not always practical.

To overcome the problems inherent in conventional approaches, the present invention provides a means for resolving the 180° roll ambiguity of the polarization measurements of the spinning projectile 11. Use is made of a uniquely asymmetric waveform 21 that is generated by synthesizing ultra wideband short pulses from their individual spectral components. Such synthesized ultra wideband short pulses 22 may be generated using techniques disclosed in U.S. Patent Nos. 5,146,616 and 5,239,309, for example, assigned to the assignee of the present invention.

Specifically, it has been found that resolution of the polarization ambiguity, and hence the true orientation of the spinning projectile 11, may be determined by radiating a series of repeating short pulses 22 having the electric field time-history shown in Fig. 2. This asymmetric waveform 21 has a relatively strong but short positive electric field pulse 23 followed by a relatively weak but long negative electric-field baseline 24. By radiating a plurality of pulses 22 having this time-history from a linearly polarized antenna (Fig. 3) that is part of the radar 14, the electric field can be caused to point upward during the positive pulse and downward during the negative baseline.

To accurately control the guided projectile 11, it is provided with a reflecting dipole antenna 26 that contains a switching diode 27 as is shown in Fig. 3. The reflecting dipole antenna 26 and switching diode 27 rotate or spin with the projectile 11. More specifically, Fig. 3 shows the reflecting dipole antenna 26 employed on the spinning guided projectile 11 that is used to reflect the asymmetric impulse radar waveform 21 shown in Fig. 2. The reflected waveform 21 is processed to resolve ambiguities in the roll orientation of the spinning guided projectile 11.

When the electric field pulse 23 of the asymmetric waveform 21 shown in Fig. 2 are aligned along a conduction direction of the diode 27, the halves of the dipole antenna 26 are electrically connected. In this condition, the total reflected signal from the dipole antenna 26 is strong. When the antenna 26 and diode 27 are aligned orthogonal to the electric field pulse 23, the scattering strength is very small or weak and the total reflected signal is weak. When the diode 27 is aligned anti-parallel to the electric field pulse 23, the diode 27 is back-biased and the two halves of the antenna 26 are disconnected. In this back-biased condition, the scattering strength of the antenna 26 is small for the pulses 23 but non-zero.

By using the reflected signal strength generated by the antenna 26 and diode 27, the 180° roll ambiguity of the spinning projectile 11 is resolved. The radar 14, such as a microwave impulse radar 14 is used to track the roll angle of the spinning projectile 11 by monitoring the reflected signal, and in particular, the three states of the reflected signal; namely, strong, weak, and almost zero. This tracking may be performed in all weather conditions and at large line-of-sight distances.

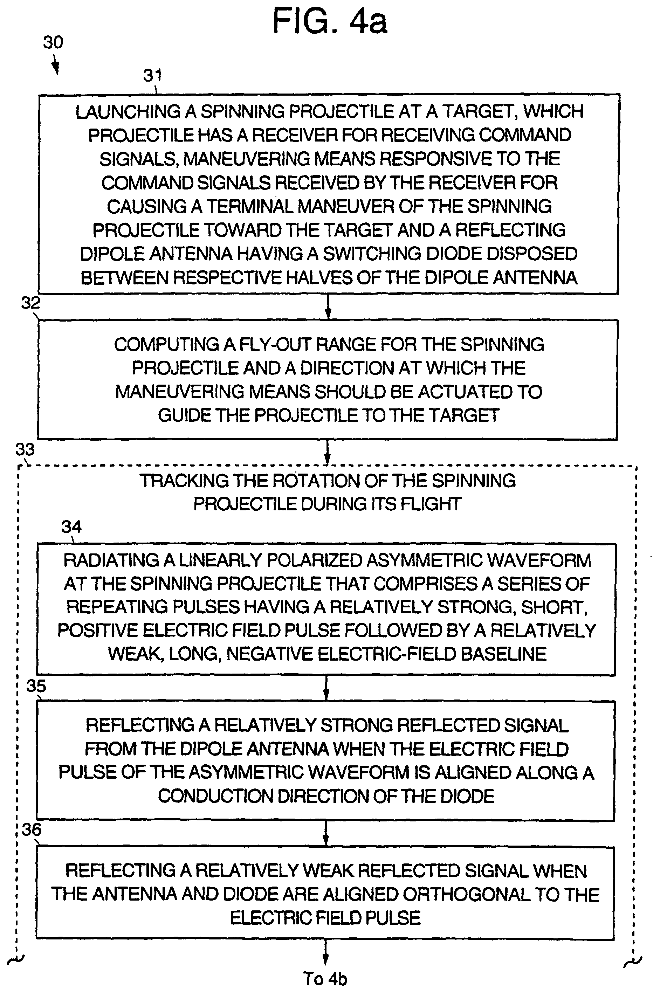

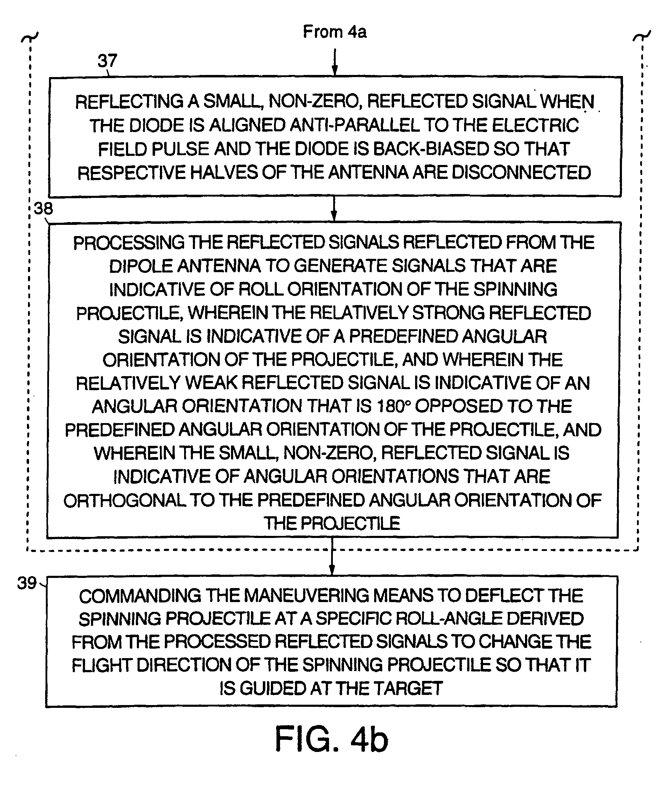

Referring to Figs. 4a and 4b they illustrate one method 30 in accordance with the principles of the present invention of guiding a spinning guided projectile 11 at a target 13. The method 30 comprises the following steps. A spinning projectile 11 is launched at step 31 at the target 13. The projectile 11 comprises a receiver 15 for receiving command signals, maneuvering means 16 responsive to the command signals received by the receiver 15 for causing a terminal maneuver of the spinning projectile 11 toward the target 13, and a reflecting dipole antenna 26 that includes a switching diode 27 disposed between respective halves of the dipole antenna 26. A fly-out range for the spinning projectile 11 and a direction at which the maneuvering means 16 should be actuated to guide the projectile to the target 13 are computed in step 32.

The rotation of the spinning projectile 11 is tracked in step 33 during its flight by radiating in step 34 an linearly polarized asymmetric waveform 21 at the spinning projectile 11 that comprises a series of repeating pulses 22 having a relatively strong, short, positive electric field pulse 23 followed by a relatively weak, long, negative electric-field baseline 24. A relatively strong reflected signal is reflected in step 35 from the dipole antenna 26 when the electric field pulse 23 of the asymmetric waveform 21 is aligned along a conduction direction of the diode 27 being indicative of the predefined angular orientation of the projectile 11 at step 38, and a relatively weak reflected signal is reflected 36 when the antenna 26 and diode 27 are aligned orthogonal to the electric field pulse 23, and a small, non-zero, reflected signal is reflected 37 when the diode 27 is aligned anti-parallel to the electric field pulse 23 and the diode 27 is back-biased so that respective halves of the antenna 26 are disconnected.

The reflected signals reflected from the dipole antenna 26 are processed in step 38 to generate signals that are indicative of roll orientation of the spinning projectile 11, wherein the relatively strong reflected signal is indicative of the predefined angular orientation of the projectile 11, and wherein the relatively weak reflected signal is indicative of an angular orientation that is 180° opposed to the predefined angular orientation of the projectile 11, and wherein the small, non-zero, reflected signal is indicative of angular orientations that are orthogonal to the predefined angular orientation of the projectile 11. The maneuvering means 16 is commanded in step 39 to deflect the spinning projectile 11 at a specific roll-angle derived from the processed reflected signals to change the flight direction of the spinning projectile 11 so that it is guided at the target 13.

Thus, an impulse radar guidance apparatus and method for use with a spinning guided projectile has been disclosed that uses an asymmetric waveform to determine the instantaneous roll angle of the spinning projectile and resolves the 180° roll ambiguity of the projectile. It is to be understood that the described embodiments are merely illustrative of some of the many specific embodiments which represent applications of the principles of the present invention.

## Claims

1. An impulse radar guided projectile system (10) for guiding a spinning projectile (11) **characterized by**:
a spinning projectile (11) comprising a receiver (15) for receiving commands, maneuvering means (16) responsive to command signals received by the receiver for causing a terminal maneuver of the spinning projectile, and a reflecting dipole antenna (26) having a switching diode (27) disposed between respective halves of the dipole antenna;
a launcher (12) for launching the spinning projectile at a target (13);
tracking means (17):
for computing a fly-out range for the spinning projectile and a direction at which the maneuvering means (16) should be actuated to guide the projectile to the target;
for tracking the rotation of the spinning projectile during its flight by radiating an linearly polarized asymmetric waveform (21) at the spinning projectile that comprises a series of repeating pulses (22) having a relatively strong, short, positive electric field pulse (23) followed by a relatively weak, long, negative electric-field baseline (24);
for processing signals reflected from the dipole antenna to generate signals that are indicative of roll orientation of the spinning projectile, which reflected signals are indicative of the roll orientation of the spinning projectile, whereby a relatively strong signal is reflected from the dipole antenna when the electric field pulse of the asymmetric waveform is aligned along a conduction direction of the diode, and a relatively weak signal is reflected when the antenna and diode are aligned orthogonal to the electric field pulse, and a small, non-zero, signal is reflected when the diode is aligned anti-parallel to the electric field pulse and the diode is back-biased so that respective halves of the antenna are disconnected; and
for commanding (39) the maneuvering means to deflect the spinning projectile at a specific roll-angle derived from the processed reflected signals to change the flight direction of the spinning projectile so that it is guided at the target.

2. The apparatus (10) of Claim 1 wherein the spinning projectile (11) is **characterized by** a spinning bullet (11).

3. The apparatus (10) of Claim 1 wherein the spinning projectile (11) is **characterized by** a spinning missile (11).

4. The apparatus (10) of Claim 3 wherein the spinning projectile (11) is **characterized by** a spinning artillery projectile (11).

5. The apparatus (10) of Claim 1 wherein the tracking means (17) is **characterized by** a microwave radar (14).

6. The apparatus (10) of Claim 1 wherein the tracking means (17) is **characterized by** a laser radar (14).

7. The apparatus (10) of Claim 1 wherein the maneuvering means (16) is **characterized by** a side-firing thruster (16).

8. The apparatus (10) of Claim 1 wherein the maneuvering means (16) is commanded to fire when the spinning projectile (11) rotates to an appropriate roll angle.

9. The apparatus (10) of Claim 1 wherein the asymmetric waveform (21) is generated by synthesizing ultra wideband short pulses from their individual spectral components.

10. The apparatus (10) of Claim 1 wherein the tracking means (17) is **characterized by** a linearly polarized antenna (25).

11. A method (30) of guiding a spinning guided projectile (11) at a target (13), said method (30) **characterized by** the steps of:
launching (31) a spinning projectile (11) at the target (13), which projectile comprises a receiver (15) for receiving command signals, maneuvering means (16) responsive to the command signals received by the receiver for causing a terminal maneuver of the spinning projectile toward the target, and a reflecting dipole antenna (26) having a switching diode (27) disposed between respective halves of the dipole antenna;
computing (32) a fly-out range for the spinning projectile and a direction at which the maneuvering means should be actuated to guide the projectile to the target;
tracking (33) the rotation of the spinning projectile during its flight by:
radiating (34) a linearly polarized asymmetric waveform (21) at the spinning projectile that comprises a series of repeating pulses (22) having a relatively strong, short, positive electric field pulse (23) followed by a relatively weak, long, negative electric-field baseline (24);
reflecting (35) a relatively strong reflected signal from the dipole antenna when the electric field pulse of the asymmetric waveform is aligned along a conduction direction of the diode being indicative of the predefined angular orientation of the projectile (11), and reflecting (36) a relatively weak reflected signal when the antenna and diode are aligned orthogonal to the electric field pulse, and reflecting (37) a small, non-zero, reflected signal when the diode is aligned anti-parallel to the electric field pulse and the diode is back-biased so that respective halves of the antenna are disconnected;
processing (38) the reflected signals reflected from the dipole antenna to generate signals that are indicative of roll orientation of the spinning projectile, wherein the relatively strong reflected signal is indicative of the predefined angular orientation of the projectile, and wherein the relatively weak reflected signal is indicative of an angular orientation that is 180° opposed to the predefined angular orientation of the projectile, and wherein the small, non-zero, reflected signal is indicative of angular orientations that are orthogonal to the predefined angular orientation of the projectile; and
commanding (39) the maneuvering means to deflect the spinning projectile at a specific roll-angle derived from the processed reflected signals to change the flight direction of the spinning projectile so that it is guided at the target.

12. The method (30) of Claim 11 wherein the step of radiating (34) a linearly polarized asymmetric waveform (21) is **characterized by** the steps of:
synthesizing ultra wideband short pulses from their individual spectral components to form an asymmetric waveform (21);
linearly polarizing the synthesized ultra wideband short pulses; and
radiating the linearly polarized synthesized ultra wideband short pulses.

## Patentansprüche

1. Impulsradar geführtes Projektilsystem (10) zum Führen eines mit Drall beaufschlagten Projektils (11), **gekennzeichnet durch**:
ein Drall aufweisendes Projektil (11) mit einem Empfänger (15) zum Empfangen von Befehlen, einem Manövermittel (16), das auf Befehlssignale anspricht, die von dem Empfänger empfangen werden, um ein abschließendes Manöver des Drall aufweisenden Projektils auszulösen, und einer reflektierenden Dipolantenne (26) mit einer Schaltdiode (27) die zwischen jeweiligen Hälften der Dipolantenne angeordnet ist;
eine Abschussvorrichtung (12) zum Abschießen des Drall aufweisenden Projektils auf ein Ziel (13);
Verfolgungsmittel (17):
zum Berechnen eines Ausflugbereichs für das Drall aufweisende Projektil und einer Richtung, in die das Manövermittel (16) betätigt werden soll, um das Projektil auf das Ziel zu führen;
zum Verfolgen der Drehung des Drall aufweisenden Projektils während dessen Flug **durch** Abstrahlen einer linear polarisierten asymmetrischen Wellenform (21) auf das Drall aufweisende Projektil, die eine Reihe von sich wiederholenden Impulsen (22) mit einem relativ starken kurzen positiven elektrischen Feldimpuls (23) gefolgt von einem relativ schwachen, langen, negativen elektrischen Feld-Basislinie (24) umfasst;
zum Verarbeiten von Signalen, die von der Dipolantenne reflektiert werden, um Signale zu erzeugen, die die Roll-Ausrichtung des Drall aufweisenden Projektils anzeigen, welche reflektierten Signale die Rollrichtung des Drall aufweisenden Projektils anzeigen, wobei ein relativ starkes Signal von der Dipolantenne reflektiert wird, wenn der elektrische Feldimpuls der asymmetrischen Wellenform mit einer Leitungsrichtung der Diode ausgerichtet ist, und ein relativ schwaches Signal reflektiert wird, wenn die Antenne und die Diode orthogonal zu dem elektrischen Feldimpuls ausgerichtet sind, und ein kleines Signal, das nicht Null ist, wird reflektiert, wenn die Diode antiparallel zu dem elektrischen Feldimpuls ausgerichtet ist, und die Diode rückwärts vorgespannt ist, so dass jeweilige Hälften der Antenne nicht verbunden sind; und
zum Anweisen (39) des Manövermittels, das Drall aufweisende Projektil mit einem spezifischen Rollwinkel abzulenken, der aus den verarbeiteten reflektierten Signalen erhalten wird, um die Flugrichtung des Drall aufweisenden Projektils zu ändern, so dass es auf das Ziel geführt wird.

2. Vorrichtung (10) nach Anspruch 1, wobei das Drall aufweisende Projektil (11) **gekennzeichnet ist durch** eine Drall aufweisende Kugel (11).

3. Vorrichtung (10) nach Anspruch 1, wobei das Drall aufweisende Projektil (11) **gekennzeichnet ist durch** eine Drall aufweisende Rakete (11).

4. Vorrichtung (10) nach Anspruch 3, wobei das Drall aufweisende Projektil (11) **gekennzeichnet ist durch** ein Drall aufweisendes Artellerieprojektil (11).

5. Vorrichtung (10) nach Anspruch 1, wobei das Verfolgungsmittel (17) **gekennzeichnet ist durch** ein Mikrowellenradar (14).

6. Vorrichtung (10) nach Anspruch 1, wobei das Verfolgungsmittel (17) **gekennzeichnet ist durch** ein Laserradar (14).

7. Vorrichtung (10) nach Anspruch 1, wobei das Manövermittel (16) **gekennzeichnet ist durch** ein zur Seite feuerndes Triebwerk (16).

8. Vorrichtung (10) nach Anspruch 1, wobei das Manövermittel (16) angewiesen wird zu zünden, wenn das Drall aufweisende Projektil (11) in einen geeigneten Rollwinkel dreht.

9. Vorrichtung (10) nach Anspruch 1, wobei die asymmetrische Wellenform (21) erzeugt wird, indem Ultrabreitband-Kurzimpulse aus ihren jeweiligen Spektralkomponenten synthetisiert werden.

10. Vorrichtung (10) nach Anspruch 1, wobei das Verfolgungsmittel (17) **gekennzeichnet ist durch** eine linear polarisierte Antenne (25).

11. Verfahren (30) zum Führen eines Drall aufweisenden geführten Projektils (11) auf ein Ziel (13), wobei das Verfahren (30) durch die Schritte **gekennzeichnet** ist:
Abschießen (31) eines Drall aufweisenden Projektils (11) auf das Ziel (13), welches Projektil einen Empfänger (15) zum Empfang von Befehlssignalen, ein Manövermittel (16), das auf Befehlssignale anspricht, die von dem Empfänger empfangen werden, um ein abschließendes Manöver des Drall aufweisenden Projektils in Richtung des Ziels einzuleiten, und eine reflektierende Dipolantenne (26) aufweist, die eine Umschaltdiode (27) umfasst, die zwischen jeweiligen Hälften der Dipolantenne angeordnet ist;
Berechnen (32) eines Ausflugbereichs des Drall aufweisenden Projektils und einer Richtung, in der das Manövermittel betätigt werden soll, um das Projektil auf das Ziel zu führen;
Verfolgen (33) der Drehung des Drall aufweisenden Projektils während seines Flugs durch:
Ausstrahlen (34) einer linear polarisierten, asymmetrischen Wellenform (21) auf das Drall aufweisende Projektil, die eine Reihe von sich wiederholenden Impulsen (22) mit einem relativ starken, kurzen, positiven elektrischen Feldimpuls (21) gefolgt von einer relativ schwachen, langen, negativen elektrischen Feld Basislinie aufweist;
Reflektieren (35) eines relativ starken reflektierten Signals von der Dipolantenne, wenn der elektrische Feldimpuls der asymmetrischen Wellenform mit einer Leitungsrichtung der Diode ausgerichtet ist, die die vordefinierte Winkelrichtung des Projektils (11) anzeigt, und Reflektieren (36) eines relativ schwachen reflektierten Signals, wenn die Antenne und die Diode orthogonal zu dem elektrischen Feldimpuls ausgerichtet sind, und Reflektieren (37) eines kleinen reflektierten Signals, das nicht Null ist, wenn die Diode antiparallel zu dem elektrischen Feldimpuls ausgerichtet ist und die Diode rückwärts vorgespannt ist, so dass jeweilige Hälften der Antenne getrennt sind;
Verarbeiten (38) der reflektierten Signale, die von der Dipolantenne reflektiert werden, um Signale zu erzeugen, die die Rollrichtung des Drall aufweisenden Projektils anzeigen, wobei das relativ starke reflektierte Signal die vordefinierte Winkelausrichtung des Projektils anzeigt, und wobei das relativ schwache reflektierte Signal eine Winkelausrichtung anzeigt, die 180° entgegengesetzt zu der vordefinierten Winkelausrichtung des Projektils ist, und wobei das kleine reflektierte Signal, das nicht Null ist, die Winkelausrichtungen anzeigt, die orthogonal zu der vordefinierten Winkelausrichtung des Projektils sind; und
Anweisen (39) des Manövermittels, das Drall aufweisende Projektil in einem spezifischen Rollwinkel abzulenken, der aus den verarbeiteten reflektierten Signalen erhalten wird, um die Flugrichtung des Drall aufweisenden Projektils zu ändern, so dass es auf das Ziel geführt wird.

12. Verfahren (30) nach Anspruch 11, wobei der Schritt des Ausstrahlens (34) in der linear polarisierten, asymmetrischen Wellenform (21) durch die Schritte **gekennzeichnet** ist:
Synthetisieren von Ultrabreitband-Kurzimpulsen aus ihren jeweiligen Spektralkomponenten, um eine asymmetrische Wellenform (21) zu bilden;
linear Polarisieren der synthetisierten Ultrabreitband-Kurzimpulse; und
Ausstrahlen der linear polarisierten, synthetisierten Ultrabreitband-Kurzimpulse.

## Revendications

1. Système de projectile (10) guidé par radar à impulsions, pour guider un projectile tournant (11), **caractérisé par** :
un projectile tournant (11) comprenant un récepteur (15) pour recevoir des ordres, un moyen de manoeuvre (16) réagissant à des signaux d'ordres reçus par le récepteur pour provoquer une manoeuvre finale du projectile tournant, et une antenne dipôle à réflexion (26) ayant une diode de commutation (27) disposée entre des moitiés respectives de l'antenne dipôle;
un lanceur (12) pour lancer le projectile tournant vers une cible (13);
un moyen de poursuite (17) :
pour calculer une distance de vol pour le projectile tournant et une direction auxquelles le moyen de manoeuvre (16) doit être actionné pour guider le projectile vers la cible;
pour suivre la rotation du projectile tournant pendant son vol en rayonnant vers le projectile tournant une forme d'onde asymétrique (21), polarisée linéairement, qui comprend une série d'impulsions répétitives (22) ayant une impulsion de champ électrique relativement forte, courte, positive (23), suivie par une ligne de base de champ électrique relativement faible, longue, négative (24);
pour traiter des signaux réfléchis par l'antenne dipôle afin de générer des signaux qui indiquent une orientation en roulis du projectile tournant, ces signaux réfléchis indiquant l'orientation en roulis du projectile tournant, grâce à quoi un signal relativement fort est réfléchi par l'antenne dipôle lorsque l'impulsion de champ électrique de la forme d'onde asymétrique est alignée avec une direction de conduction de la diode, et un signal relativement faible est réfléchi lorsque l'antenne et la diode sont alignées de manière orthogonale à l'impulsion de champ électrique, et un signal faible, non nul, est réfléchi lorsque la diode est alignée de manière anti-parallèle à l'impulsion de champ électrique, et la diode est polarisée en inverse, de façon que les moitiés respectives de l'antenne soient déconnectées; et
pour commander (39) le moyen de manoeuvre de façon à dévier le projectile tournant à un angle de roulis spécifique obtenu à partir des signaux réfléchis traités, de façon à changer la direction de vol du projectile tournant pour qu'il soit guidé vers la cible.

2. Appareil (10) selon la revendication 1, dans lequel le projectile tournant (11) est **caractérisé par** une balle tournante (11).

3. Appareil (10) selon la revendication 1, dans lequel le projectile tournant (11) est **caractérisé par** un missile tournant (11).

4. Appareil (10) selon la revendication 3, dans lequel le projectile tournant (11) est **caractérisé par** un projectile d'artillerie tournant (11).

5. Appareil (10) selon la revendication 1, dans lequel le moyen de poursuite (17) est **caractérisé par** un radar micro-onde (14).

6. Appareil (10) selon la revendication 1, dans lequel le moyen de poursuite (17) est **caractérisé par** un radar laser (14).

7. Appareil (10) selon la revendication 1, dans lequel le moyen de manoeuvre (16) est **caractérisé par** un propulseur à poussée latérale (16).

8. Appareil (10) selon la revendication 1, dans lequel le moyen de manoeuvre (16) est commandé pour être mis à feu lorsque le projectile tournant (11) prend un angle de roulis approprié au cours de sa rotation.

9. Appareil (10) selon la revendication 1, dans lequel la forme d'onde asymétrique (21) est générée en synthétisant des impulsions courtes à bande ultra-large à partir de leurs composantes spectrales individuelles.

10. Appareil (10) selon la revendication 1, dans lequel le moyen de poursuite (17) est **caractérisé par** une antenne polarisée linéairement (25).

11. Procédé (30) pour guider vers une cible (13) un projectile guidé tournant (11), ce procédé (30) étant **caractérisé par** les étapes suivantes :
on lance (31) vers la cible (13) un projectile tournant (11), ce projectile comprenant un récepteur (15) pour recevoir des signaux d'ordres, un moyen de manoeuvre (16) réagissant aux signaux d'ordres reçus par le récepteur en effectuant une manoeuvre finale du projectile tournant pour le diriger vers la cible, et une antenne dipôle à réflexion (26) ayant une diode de commutation (27) disposée entre des moitiés respectives de l'antenne dipôle ;
on calcule (32) une distance de vol pour le projectile tournant et une direction auxquelles le moyen de manoeuvre doit être actionné pour guider le projectile vers la cible ;
on suit (33) la rotation du projectile tournant pendant son vol :
en rayonnant (34) vers le projectile tournant une forme d'onde asymétrique (21) polarisée linéairement, qui comprend une série d'impulsions répétitives (22) ayant une impulsion de champ électrique relativement forte, courte, positive (23) suivie par une ligne de base de champ électrique relativement faible, longue, négative (24);
en réfléchissant (35) par l'antenne dipôle un signal réfléchi relativement fort lorsque l'impulsion de champ électrique de la forme d'onde asymétrique est alignée avec une direction de conduction de la diode, indiquant l'orientation angulaire prédéfinie du projectile (11), et réfléchissant (36) un signal réfléchi relativement faible lorsque l'antenne et la diode sont alignées de manière orthogonale à l'impulsion de champ électrique, et réfléchissant (37) un signal réfléchi faible, non nul, lorsque la diode est alignée de manière anti-parallèle à l'impulsion de champ électrique et lorsque la diode est polarisée en inverse, de façon que des moitiés respectives de l'antenne soient déconnectées;
en traitant (38) les signaux réfléchis qui sont réfléchis par l'antenne dipôle pour générer des signaux indiquant l'orientation en roulis du projectile tournant, le signal réfléchi relativement fort indiquant l'orientation angulaire prédéfinie du projectile, et le signal réfléchi relativement faible indiquant une orientation angulaire qui est opposée à 180° à l'orientation angulaire prédéfinie du projectile, et le signal réfléchi faible, non nul, indiquant des orientations angulaires qui sont orthogonales à l'orientation angulaire prédéfinie du projectile ; et
en commandant (39) le moyen de manoeuvre de façon à dévier le projectile tournant à un angle de roulis spécifique obtenu à partir des signaux réfléchis traités, pour changer la direction de vol du projectile tournant de façon à le guider vers la cible.

12. Procédé (30) selon la revendication 11, dans lequel l'étape consistant à rayonner (34) une forme d'onde asymétrique (21) polarisée linéairement est **caractérisée par** les étapes suivantes :
on synthétise des impulsions courtes à bande ultra-large à partir de leurs composantes spectrales individuelles, pour former une forme d'onde asymétrique (21);
on polarise linéairement les impulsions courtes à bande ultra-large synthétisées; et
on rayonne les impulsions courtes à bande ultra-large synthétisées polarisées linéairement.
